# EUROPEAN PATENT SPECIFICATION

(11) **EP 3 002 071 B1**
(45) Date of publication and mention of the grant of the patent: **10.01.2018**
(21) Application number: 15187674.5
(22) Date of filing: 30.09.2015
(51) Int. Cl.: B22D 17/32, B22D 29/00, B22D 17/20

(54) **APPARATUS FOR CHECKING DIE CASTINGS AND METHOD OF USING SUCH APPARATUS**
VORRICHTUNG ZUR ÜBERPRÜFUNG VON GUSSTEILEN UND VERFAHREN ZUR VERWENDUNG SOLCH EINER VORRICHTUNG
APPAREIL DE VÉRIFICATION DE PIÈCES COULÉES SOUS PRESSION ET PROCÉDÉ D'UTILISATION D'UN TEL APPAREIL

(30) Priority: 01.10.2014 IT PD20140252
(43) Date of publication of application: 06.04.2016
(73) Proprietor: IDRA S.R.L., 25039 Travagliato BS (IT)
(72) Inventor: BONI, Roberto, 25128 Brescia (IT); FERRI, Ruggero, 25038 Rovato BS (IT)
(74) Representative: Modiano, Micaela Nadia

(56) References cited:
- DE-A1-102007 031 654
- US-A1- 2003 211 188
- US-B2- 6 592 354

## Description

The present invention relates to an apparatus for checking die castings according to claim 1. The invention also relates to a method according to claim 8 of using such apparatus.

The die casting machines that are known today, which are used for the production of metal alloy die castings, and in particular of non-ferrous alloy castings, are thermally regulated and controlled by way of means of circulation of the liquid for cooling the die of the machine, by way of control units for controlling the temperature of the diathermic oil for heating the die, and by way of means of adjusting the temperature of the holding furnace for the liquid metal that feeds the die casting machine.

Knowing the thermal conditions inside the die is essential in order to obtain castings that conform to the design parameters and are therefore correct, both geometrically and structurally.

Nowadays the thermal control of the die is done through measuring the temperature of the liquid for cooling the die or by way of the installation of thermocouples inside the die proper, or by way of a thermographic camera arranged between the two planes of the press in order to measure the temperature of the die.

Such systems for controlling the temperature in the die, although widespread, suffer a number of drawbacks.

A first limitation is constituted by the fact that the thermocouples installed inside a die have long response times and hystereses, with consequent lengthening of the molding process and slowing down of rates of production.

Similarly, the measuring of the temperature of the cooling liquid also requires a given amount of time.

A second limitation relates to the use of a thermographic camera between the planes of the press, such thermographic camera being subject to fouling owing to spatters of lubricant and owing to the generation of steam in the areas surrounding the die; the thermographic camera therefore suffers the drawback of requiring cleaning and maintenance, with consequent dead times in the production process.

Molding production processes that use die casting suffer an additional drawback, which is linked to checking the geometric conformance to the design geometry of the casting extracted from the die, and also the surface integrity of the casting proper.

Such control is nowadays delegated to an operator of the press, with the consequent inevitable limitations that derive from the intervention of a person, even if skilled.

DE 10 2007 031 654 A1 D1 discloses apparatus and method for the completeness check of die castings with 2D technology and with induced currents (magnetic).

US 6,592,354 B2 an infrared system for identifying molded parts in terms of the presence within the mold after an activation of part ejectors, comprising the use of infrared rays to overcome the difficulties related to the variability of visible light.

The aim of the present invention is to provide an apparatus for checking die castings which is capable of overcoming the above mentioned drawbacks in controlling the die temperature and also in controlling the dimensional and superficial integrity of the die casting machines known today.

Within this aim, an object of the invention is to provide a method of using such apparatus which makes it possible to overcome the above mentioned drawbacks of the known art, with advantages in terms of rates of production and of quality of the castings.

Another object of the invention is to provide an apparatus that can easily be applied to existing die casting machines.

Another object of the invention is to provide an apparatus that can ensure more precise and systematic geometry and surface checking of castings with respect to what is performed in the known art.

Another object of the invention is to provide an apparatus that makes it possible to intervene in the adjustment of the thermal conditions of the die rapidly and precisely, with consequent reduction of dead times and increase of rates of production.

In accordance with the invention, there is provided an apparatus for checking die castings as defined in the appended claims.

Further characteristics and advantages of the invention will become better apparent from the description of a preferred, but not exclusive, embodiment of the apparatus according to the invention, which is illustrated by way of non-limiting example in the accompanying drawings wherein:

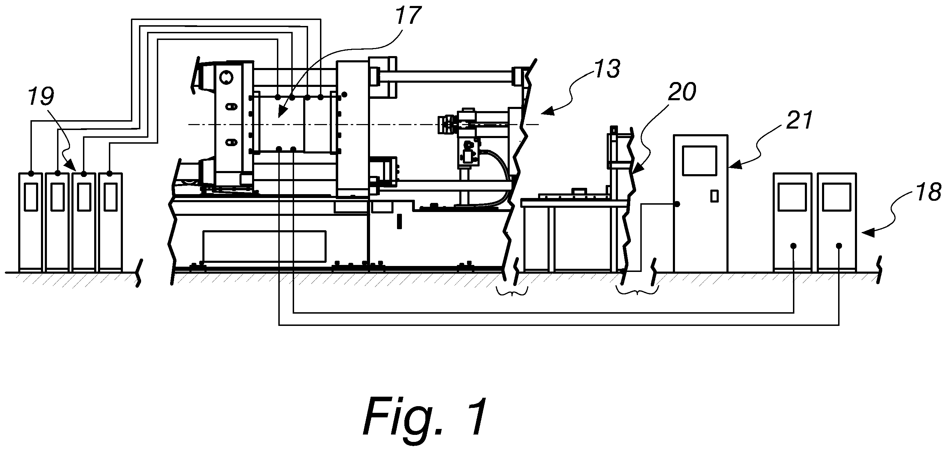

- Figure 1 is a schematic side view of a conventional die casting machine;
- Figure 2 is a schematic plan view of the apparatus according to the invention;
- Figure 3 is a schematic side view of the apparatus according to the invention.

With reference to the figures, an apparatus for checking die castings according to the invention is generally designated with the reference numeral 10.

The apparatus 10 comprises:
- means 11 for extracting and moving a die casting 12 from a die casting machine 13, the latter being understood as being of conventional type,
- means for the analysis of the integrity of an extracted die casting and of its geometric and dimensional precision, for example an optical video camera 14 for the integrity analysis of the die casting 12 extracted from the die casting machine 13 and for the analysis of its geometric and dimensional precision,
- means for the thermal mapping of the extracted die casting, for example an infrared video camera 15 for the thermal mapping of the extracted die casting 12,
- an electronic unit 16 for digitizing the images acquired by the optical video camera 14 and by the infrared video camera 15 and for comparing data extracted from such acquired images with corresponding reference design data.

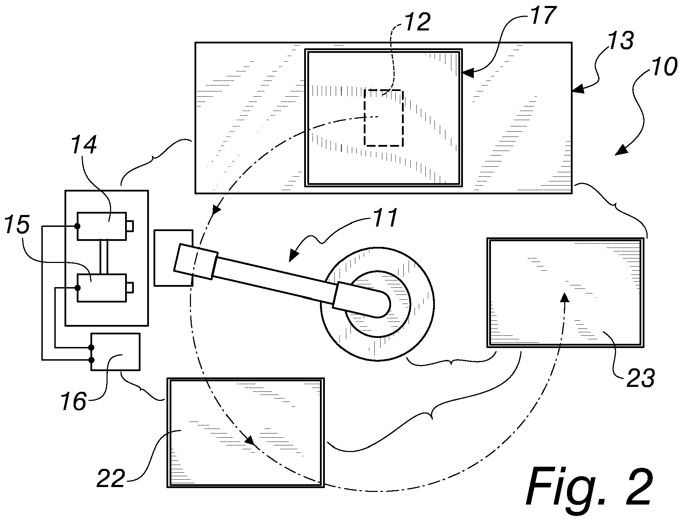

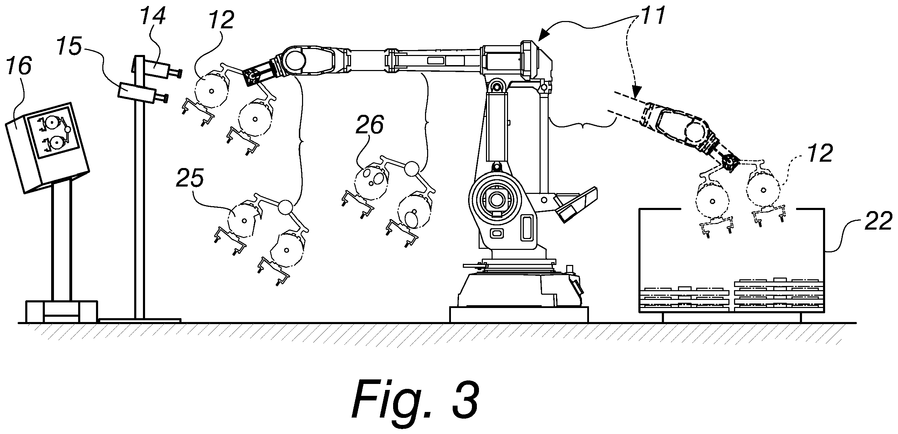

The extraction means 11 can be constituted, for example, by a six-axis manipulator arm, as shown in Figures 2 and 3.

The die casting machine 13 comprises:
- a die 17,
- control units 18 for adjusting the temperature of the diathermic oil for heating the die 17,
- means 19 for circulating the liquid for cooling the die 17,
- a holding furnace 20 for the liquid metal that feeds the die 17 of the die casting machine 13,
- and means 21 of adjusting the temperature of the holding furnace 20.

The apparatus 10 also comprises a first unloading region 22, for integer (compact) and conforming castings, and a second unloading region 23, for castings that are not integer (with regard for example to compactness) or are geometrically or dimensionally nonconforming with respect to the design data.

The manipulator arm is actuated according to a program adapted to make it perform the following operations:
- extract a die casting 12 from the die 17,
- convey the die casting 12 in front of the optical video camera 14 and the infrared video camera 15,
- hold the die casting 12 in position for a time necessary for the parameter acquisitions with such video cameras 14 and 15,
- optionally reposition of the die casting 12 for additional parameter acquisitions on the part of the video cameras 14 and 15 according to a different viewpoint,
- convey the die casting 12 either to a first unloading region 22, for integer (compact) and conforming castings, or to a second unloading region 23, for castings that are not integer or are geometrically or dimensionally nonconforming with respect to the design data.

The combined use of one or more optical video cameras 14 and of one or more infrared video cameras 15, connected to the electronic unit 16 for digitizing the images, makes it possible to carry out, with only the apparatus 10 according to the invention, the checking of geometric integrity and the thermal analysis of die castings produced by the die casting machine 13.

In particular, the digital vision analysis performed by way of the optical video camera 14 enables the comparison of the external profile of the casting 12 with the design profile, which is stored in the electronic unit 16, and as a consequence the electronic unit 16 processes the data and gives indications on the integrity of the casting 12 under examination and on its geometric and dimensional precision.

The electronic unit 16, managed by an adapted program, detects, for example, the presence or otherwise of holes caused by any pointed items, and highlights any breakages of the die thus making it possible to immediately address the problem while at the same time identifying the nonconforming die castings and setting them aside.

Simultaneously, the image of the casting is associated with a corresponding thermal map which is produced by way of the infrared video camera 15, and such acquired thermal map is compared with a 'correct' design thermal map or one generated based on previous readings of die castings that are structurally, geometrically and dimensionally integer.

Figure 3 shows, for the purposes of example, a geometrically defective casting 25, and a casting with defective thermal mapping 26, both to be rejected.

By measuring the temperature of a die casting immediately after its extraction from the die, the system obtains a measurement of the temperature inside the die 17 that is indirect, but one which is immediate and in real time, unlike conventional measurements which are based on temperature readings of the fluids for cooling and heating the die, or are made by way of readings from thermocouples inside the die, in both cases operations that require relatively lengthy times.

Geometric, dimensional, and thermal deviations from the design data are reported in real time by the electronic unit 16 and make it possible for an operator to reject a piece and, if necessary, to adjust the operating parameters of the die casting machine 13, such as:
- cooling times,
- circulation of the cooling water in the die 17 by way of the circulation means 19,
- adjustment of the diathermic oil by way of the control units 18,
- adjustment of the temperature of the alloy in the holding furnace 20 by way of the corresponding adjustment means 21.

Obviously the design data and parameters to be compared with the data and the parameters detected are understood to be specified with tolerance intervals, which may be differentiated by area of the piece according to the degree of criticality of the various areas, such tolerance intervals being established as a function of the preset quality of the product that it is desired to obtain.

The invention also relates to a method of checking die castings which can be carried out with the checking apparatus 10.

The method of checking die castings comprises the following operations:
- extract a die casting 12 from the die 17 of a die casting machine 13,
- perform acquisitions of geometric and dimensional parameters of the die casting 12,
- perform acquisitions of thermal parameters of the die casting 12,
- compare the acquired data and parameters with corresponding design data and parameters,
- accept or reject the die casting 12,
- if the die casting 12 is to be rejected owing to lack of conformity with thermal data and parameters, then intervene on preset process parameters in order to modify the temperature in the die 17 of the die casting machine 13.

The parameters are, for example, the above-mentioned:
- cooling times,
- circulation of the cooling water in the die 17 by way of the circulation means 19,
- adjustment of the diathermic oil by way of the control units 18,
- adjustment of the temperature of the alloy in the holding furnace 20 by way of the corresponding adjustment means 21,
- modification of the lubrication cycle of the die 17.

Also part of the method according to the invention is the sequence of operations carried out by the manipulator arm, which, as described above, is actuated by way of a program adapted to make it execute the following operations:
- extract a die casting 12 from the die 17,
- convey the die casting 12 in front of the optical video camera 14 and the infrared video camera 15,
- hold the die casting 12 in position for a time necessary for the parameter acquisitions with the video cameras 14 and 15,
- optionally reposition of the die casting 12 for additional parameter acquisitions on the part of the video cameras 14 and 15 according to a different viewpoint,
- convey the die casting 12 either to a first unloading region 22, for integer (compact) and conforming castings, or to a second unloading region 23, for castings that are not integer or are geometrically or dimensionally nonconforming with respect to the design data.

In practice it has been found that the invention fully achieves the intended aim and objects.

In particular, with the invention, an apparatus for checking die castings has been devised which is capable of overcoming the above mentioned drawbacks in controlling the die temperature and also in controlling the dimensional and superficial integrity of the die casting machines known today.

In particular, with the invention an apparatus has been devised that can ensure more precise and systematic geometry and surface checking of castings with respect to what is performed in the known art, thanks to the optical and thermal video cameras and to the immediate and real-time analysis performed by the associated electronic control unit on the data and parameters acquired by such video cameras.

Moreover, with the invention, a method of using such apparatus has been devised which makes it possible to overcome the above mentioned drawbacks of the known art, with advantages in terms of rates of production and of quality of the castings, thanks to the immediacy of the dimensional, geometric and thermal verifications made possible by the optical and infrared video cameras, by way of the electronic control unit that operates them and which analyzes the data and parameters acquired therefrom.

Furthermore, with the invention, an apparatus has been devised that can easily be applied to existing die casting machines, and with which to immediately check, and manage in real time, the thermal parameters of the die casting machine to which the apparatus according to the invention is fitted.

Moreover, with the invention, an apparatus has been devised that makes it possible to intervene in the adjustment of the thermal conditions of the die rapidly and precisely, with consequent reduction of dead times and increase of rates of production.

The apparatus according to the invention further overcomes the limitations linked to the difficulties of cleaning and maintenance of the thermographic cameras installed between the pressing planes of the dies of the die casting machines according to the known art.

Thanks to the apparatus according to the invention, infrared vision systems are used to check, in line and in real time, the die castings exiting from a die casting machine, and to use the results of the checks to immediately intervene in the process parameters.

The apparatus according to the invention is not sensitive to environmental conditions and therefore does not need specific protection systems or devices.

Furthermore, with the invention, an apparatus for checking die castings has been devised which makes it possible to improve the constancy of the process parameters relating to the thermal state of the die.

Also, with the invention, an apparatus has been devised that is capable of objectifying the geometric, dimensional and superficial conformance checking of die castings, thus removing the drawbacks associated with traditional visual checking performed by an operator.

The invention, thus conceived, is susceptible of numerous modifications and variations, all of which are within the scope of the appended claims. Moreover, all the details may be substituted by other, technically equivalent elements.

In practice the components and the materials employed, provided they are compatible with the specific use, and the contingent dimensions and shapes, may be any according to requirements and to the state of the art.

The disclosures in Italian Patent Application No. PD2014A000252 (102014902297617) from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An apparatus (10) for checking die castings (12), comprising:
- means (11) for extracting and moving a die casting (12) from a die casting machine (13), said means (11) for extracting and moving the die casting (12) being adapted to convey said die casting (12) from a die (17) to an unloading region (22, 23),
- means (14) for the analysis of the integrity of the extracted die casting (12) and of its geometric and dimensional precision,
- means (15) for the thermal mapping of the extracted die casting (12), said integrity and geometric and dimensional precision analysis means (14) and said thermal mapping means (15) being arranged between said die casting machine (13) and said unloading region (22,23),
- an electronic unit (16) for digitizing the data and the parameters acquired by said integrity and geometric and dimensional precision analysis (14) and by said thermal mapping means (15), and for comparing said acquired data and parameters with corresponding reference design data.

2. The apparatus according to claim 1, **characterized in that** said means for the integrity analysis of an extracted die casting and for the analysis of its geometric and dimensional precision are constituted by at least one optical video camera (14).

3. The apparatus according to one or more of the preceding claims, **characterized in that** said means for the thermal mapping of the extracted die casting comprise at least one infrared video camera (15).

4. The apparatus according to one or more of the preceding claims, **characterized in that** said extraction means (11) are constituted by a six-axis manipulator arm.

5. The apparatus according to one or more of the preceding claims, **characterized in that** said die casting machine (13) comprises:
- a die (17),
- control units (18) for adjusting the temperature of the diathermic oil for heating the die (17),
- means (19) for circulating the liquid for cooling the die (17),
- a holding furnace (20) for the liquid metal that feeds the die (17) of the die casting machine (13),
- and means (21) of adjusting the temperature of the holding furnace (20).

6. The apparatus according to one or more of the preceding claims, **characterized in that** it comprises a first unloading region (22), for integer and conforming castings, and a second unloading region (23), for castings that are not integer or are geometrically or dimensionally nonconforming with respect to the design data.

7. The apparatus according to one or more of the preceding claims, **characterized in that** it comprises a manipulator arm actuated according to a program that is adapted to make it perform the following operations:
- extract a die casting (12) from the die (17),
- convey the die casting (12) in front of the optical video camera (14) and the infrared video camera (15),
- hold the die casting (12) in position for a time necessary for the parameter acquisitions with said video cameras (14, 15),
- optionally reposition of the die casting (12) for additional parameter acquisitions on the part of said video cameras (14, 15) according to a different viewpoint,
- convey the die casting (12) either to a first unloading region (22), for integer and conforming castings, or to a second unloading region (23), for castings that are not integer or are geometrically or dimensionally nonconforming with respect to the design data.

8. A method of checking die castings, which can be performed with a checking apparatus (10) according to the preceding claims, comprising the following operations:
- extract a die casting (12) from the die (17) of a die casting machine (13),
- convey said die casting (12) in front of an integrity and geometric and dimensional precision analysis means (14), and a thermal mapping means (15), wherein said integrity and geometric and dimensional precision analysis means (14) and said thermal mapping means (15) being arranged between said die casting machine (13) an an unloading region (22,23),
- perform acquisitions of geometric and dimensional parameters of said die casting (12),
- perform acquisitions of thermal parameters of said die casting (12),
- compare the acquired data and parameters with corresponding design data and parameters,
- accept or reject said die casting (12),
- if said die casting (12) is to be rejected owing to lack of conformity with thermal data and parameters, then intervene on preset process parameters in order to modify the temperature in the die (17) of the die casting machine (13).

9. The method according to claim 8, **characterized in that** said process parameters comprise:
- cooling times,
- circulation of the cooling water in the die (17) by way of the circulation means (19),
- adjustment of the diathermic oil by way of said control units (18),
- adjustment of the temperature of the alloy in the holding furnace (20) by way of said corresponding adjustment means (21),
- modification of the lubrication cycle of the die (17).

10. The method according to claims 8 and 9, **characterized in that** it also comprises a sequence of operations performed by the manipulator arm, which is actuated by way of a program adapted to make it perform the following operations:
- extract a die casting (12) from the die (17),
- convey the die casting (12) in front of the optical video camera (14) and the infrared video camera (15),
- hold the die casting (12) in position for a time necessary for the parameter acquisitions with said video cameras (14, 15),
- optionally reposition of the die casting (12) for additional parameter acquisitions on the part of said video cameras (14, 15) according to a different viewpoint,
- convey the die casting (12) either to a first unloading region (22), for integer and conforming castings, or to a second unloading region (23), for castings that are not integer or are geometrically or dimensionally nonconforming with respect to the design data.

## Patentansprüche

1. Eine Vorrichtung (10) zur Überprüfung von Gussteilen (12), die Folgendes umfasst:
- Mittel (11) zum Extrahieren und Bewegen eines Gussteils (12) aus einer Gussteilmaschine (13), wobei die Mittel (11) zum Extrahieren und Bewegen des Gussteils (12) ausgebildet sind, um das Gussteil (12) aus einer Form (17) in einen Entladebereich (22, 23) zu befördern,
- Mittel (14) zur Analyse der Integrität des extrahierten Gussteils (12) und seiner geometrischen und dimensionalen Präzision,
- Mittel (15) zur thermalen Kartierung des extrahierten Gussteils (12), wobei die Mittel (14) zur Analyse der Integrität und der geometrischen und dimensionalen Präzision und die Mittel (15) zur thermalen Kartierung zwischen der Gussteilmaschine (13) und dem Entladebereich (22, 23) angeordnet sind,
- eine elektronische Einheit (16) zur Digitalisierung der Daten und der Parameter, die durch die Mittel (14) zur Analyse der Integrität und der geometrischen und dimensionalen Präzision und die Mittel (15) zur thermalen Kartierung erfasst werden, und zum Vergleichen der erfassten Daten und Parameter mit entsprechenden Referenz-Konstruktionsdaten.

2. Die Vörrichtung gemäß Anspruch 1, **dadurch gekennzeichnet, dass** die Mittel zur Analyse der Integrität eines extrahierten Gussteils und zur Analyse seiner geometrischen und dimensionalen Präzision aus mindestens einer optischen Videokamera (14) bestehen.

3. Die Vorrichtung gemäß einem oder mehreren der obigen Ansprüche, **dadurch gekennzeichnet, dass** die Mittel zur thermalen Kartierung des extrahierten Gussteils mindestens eine Infrarot-Videokamera (15) umfassen.

4. Die Vorrichtung gemäß einem oder mehreren der obigen Ansprüche, **dadurch gekennzeichnet, dass** die Extraktionsmittel (11) aus einem sechsachsigen Manipulatorarm bestehen.

5. Die Vorrichtung gemäß einem oder mehreren der obigen Ansprüche, **dadurch gekennzeichnet, dass** die Gussteilmaschine (13) Folgendes umfasst;
- eine Form (17),
- Steuereinheiten (18) zur Anpassung der Temperatur des diathermischen Öls zum Erhitzen der Form (17),
- Mittel (19) zum Zirkulieren der Flüssigkeit zum Kühlen der Form (17),
- einen Warmhalteofen (20) für das Flüssigmetall, das der Form (17) der Gussteilmaschine (13) zugeführt wird,
- und Mittel (21) zur Einstellung der Temperatur des Warmhalteofens (20).

6. Die Vorrichtung gemäß einem oder mehreren der obigen Ansprüche, **dadurch gekennzeichnet, dass** sie einen ersten Entladebereich (22) für ganze und passende Gussteile und einen zweiten Entladebereich (23) für Gussteile umfasst, die nicht ganz sind oder die geometrisch oder dimensional nicht den Konstruktionsdaten entsprechen.

7. Die Vorrichtung gemäß einem oder mehreren der obigen Ansprüche, **dadurch gekennzeichnet, dass** sie einen Manipulatorarm umfasst, der nach einem Programm angetrieben wird, das ausgebildet ist, um folgende Arbeiten durchzuführen:
- Extraktion eines Gussteils (12) aus der Form (17),
- Überführung des Gussteils (12) vor die optische Videokamera (14) und die Infrarot-Videokamera (15),
- Halten des Gussteils (12) in Position über einen Zeitraum, der für die Parametererfassungen mit den Videokameras (14, 15) erforderlich ist,
- fakultative Neupositionierung des Gussteils (12) für zusätzliche Parametererfassungen aus einem anderen Blickpunkt durch die Videokameras (14, 15),
- Überführung des Gussteils (12) entweder an einen ersten Entladebereich (22) für ganze und passende Gussteile oder an einen zweiten Entladebereich (23) für Gussteile, die nicht ganz sind oder die geometrisch oder dimensional nicht den Konstruktionsdaten entsprechen.

8. Ein Verfahren zur Überprüfung von Gussteilen, das durchgeführt werden kann mit einer Überprüfungsvorrichtung (10) gemäß den obigen Ansprüchen, folgende Arbeiten umfassend:
- Extrahieren eines Gussteils (12) aus der Form (17) einer Gussteilmaschine (13),
- Überführen des Gussteils (12) vor ein Mittel (14) zur Analyse der Integrität und der geometrischen und dimensionalen Präzision und vor ein Mittel (15) zur thermalen Kartierung, wobei die Mittel (14) zur Analyse der Integrität und der geometrischen und dimensionalen Präzision und die Mittel (15) zur thermalen Kartierung zwischen der Gussteilmaschine (13) und einem Entladebereich (22, 23) angeordnet sind,
- Erfassen geometrischer und dimensionaler Parameter des Gussteils (12),
- Erfassen thermischer Parameter des Gussteils (12),
- Vergleichen der erfassten Daten und Parameter mit entsprechenden Konstruktionsdaten und Parametern,
- Akzeptieren oder Verwerfen des Gussteils (12),
- wenn das Gussteil (12) aufgrund fehlender Konformität mit Wärmedaten und -parametern zu verwerfen ist, Eingreifen auf der Ebene voreingestellter Prozessparameter, um die Temperatur in der Form (17) der Gussteilmaschine (13) zu modifizieren.

9. Das Verfahren gemäß Anspruch 8, **dadurch gekennzeichnet, dass** die Prozessparameter Folgendes umfassen:
- Kühlzeiten,
- Zirkulation des Kühlwassers in der Form (17) mit Hilfe der Zirkulationsmittel (19),
- Anpassung des diathermischen Öls mit Hilfe der Steuereinheiten (18),
- Anpassung der Temperatur der Legierung im Warmhalteofen (20) mit Hilfe der jeweiligen Anpassungsmittel (21),
- Modifikation des Schmierzyklus der Form (17).

10. Das Verfahren gemäß den Ansprüchen 8 und 9, **dadurch gekennzeichnet, dass** es auch eine Sequenz von Arbeiten umfasst, die vom Manipulatorarm durchgeführt werden, welcher durch ein Programm angetrieben wird, das ausgebildet ist, um folgende Arbeiten durchzuführen:
- Extrahieren eines Gussteils (12) aus der Form (17),
- Überführen des Gussteils (12) vor die optische Videokamera (14) und die Infrarot-Videokamera (15),
- Halten des Gussteils (12) in Position über einen Zeitraum, der für die Parametererfassungen mit den Videokameras (14, 15) erforderlich ist,
- fakultatives Neupositionieren des Gussteils (12) für zusätzliche Parametererfassungen aus einem anderen Blickpunkt durch die Videokameras (14, 15),
- Überführen des Gussteils (12) entweder an einen ersten Entladebereich (22) für ganze und passende Gussteile oder an einen zweiten Entladebereich (23) für Gussteile, die nicht ganz sind oder die geometrisch oder dimensional nicht den Konstruktionsdaten entsprechen.

## Revendications

1. Un appareil (10) pour contrôler des pièces coulées (12), comprenant :
- un moyen (11) pour extraire et déplacer une pièce coulée (12) d'une machine à coulée sous pression (13), ledit moyen (11) pour extraire et déplacer la pièce coulée (12) étant apte à acheminer ladite pièce coulée (12) depuis un moule (17) jusqu'à une zone de déchargement (22, 23),
- un moyen (14) pour l'analyse de l'intégrité de la pièce coulée (12) extraite et de sa précision géométrique et dimensionnelle,
- un moyen (15) de cartographie thermique de la pièce coulée (12) extraite, ledit moyen d'analyse d'intégrité et de précision géométrique et dimensionnelle (14) et ledit moyen de cartographie thermique (15) étant disposés entre ladite machine à coulée sous pression (13) et ladite zone de déchargement (22, 23),
- une unité électronique (16) pour numériser les données et les paramètres acquis par ladite analyse d'intégrité et de précision géométrique et dimensionnelle (14) et par ledit moyen de cartographie thermique (15) et pour comparer lesdits données et paramètres acquis avec des données de conception de référence correspondantes.

2. L'appareil selon la revendication 1, **caractérisé en ce que** lesdits moyens pour l'analyse d'intégrité d'une pièce coulée extraite et pour l'analyse de sa précision géométrique et dimensionnelle sont constitués par au moins une caméra vidéo optique (14).

3. L'appareil selon une ou plusieurs des revendications précédentes, **caractérisé en ce que** ledit moyen pour la cartographie thermique de la pièce coulée extraite comprend au moins une caméra vidéo à infrarouge (15).

4. L'appareil selon une ou plusieurs des revendications précédentes, **caractérisé en ce que** ledit moyen d'extraction (11) est constitué par un bras manipulateur à six axes.

5. L'appareil selon une ou plusieurs des revendications précédentes, **caractérisé en ce que** ladite machine à coulée sous pression (13) comprend :
- un moule (17),
- des unités de régulation (18) pour régler la température de l'huile diathermique pour chauffer le moule (17).
- un moyen (19) pour faire circuler le liquide pour refroidir le moule (17),
- un four de maintien (20) pour le métal liquide qui alimente le moule (17) de la machine à coulée sous pression (13),
- et un moyen (21) pour régler la température du four de maintien (20).

6. L'appareil selon une ou plusieurs des revendications précédentes, **caractérisé en ce qu'**il comprend une première zone de déchargement (22), pour des moulages intègres et conformes, et une seconde zone de déchargement (23), pour des moulages qui ne sont pas intègres ou sont géométriquement ou dimensionnellement non conformes aux données de conception.

7. L'appareil selon une ou plusieurs des revendications précédentes, **caractérisé en ce qu'**il comprend un bras manipulateur actionné conformément à un programme qui est apte à lui faire exécuter les opérations suivantes :
- extraire une pièce coulée (12) du moule (17),
- acheminer la pièce coulée (12) devant la caméra vidéo optique (14) et la caméra vidéo à infrarouge (15),
- maintenir la pièce coulée (12) en position pendant une durée nécessaire à l'acquisition de paramètres avec lesdites caméras vidéo (14, 15),
- optionnellement, repositionner la pièce coulée (12) pour des acquisitions de paramètres additionnels par lesdites caméras vidéo (14, 15) selon un point de vue différent,
- acheminer la pièce coulée (12) soit vers une première zone de déchargement (22), pour des moulages intègres et conformes, soit vers une seconde zone de déchargement (23), pour des moulages qui ne sont pas intègres ou sont géométriquement ou dimensionnellement non conformes aux données de conception.

8. Un procédé pour contrôler des pièces coulées, qui peut être mis en oeuvra avec un appareil de contrôle (10) selon les revendications précédentes, comprenant les opérations consistant à :
- extraire une pièce coulée (12) du moule (17) d'une machine à coulée sous pression (13),
- acheminer ladite pièce coulée (12) devant un moyen d'analyse d'intégrité et de précision géométrique et dimensionnelle (14) et un moyen de cartographie thermique (15), ledit moyen d'analyse d'intégrité et de précision géométrique et dimensionnelle (14) et ledit moyen de cartographie thermique (15) étant disposés entre ladite machine à coulée sous pression (13) et une zone de déchargement (22, 23),
- réaliser des acquisitions de paramètres géométriques et dimensionnels de ladite pièce coulée (12),
- réaliser des acquisitions de paramètres thermiques de ladite pièce coulée (12),
- comparer les données et paramètres acquis avec des données et paramètres de conception correspondants,
- accepter ou rejeter ladite pièce coulée (12),
- si ladite pièce coulée (12) doit être rejetée en raison d'un manque de conformité avec des données et paramètres thermiques, intervenir alors sur les paramètres de process prédéfinis afin de modifier la température dans le moule (17) de la machine à coulée sous pression (13).

9. Le procédé selon la revendication 8, **caractérisé en ce que** lesdits paramètres de process comprennent :
- des temps de refroidissement,
- la circulation de l'eau de refroidissement dans le moule (17) à l'aide de moyens de circulation (19),
- le réglage de l'huile diathermique à l'aide desdites unités de régulation (18),
- le réglage de la température de l'alliage dans le four de maintien (20) à l'aide dudit moyen de réglage correspondant (21),
- la modification du cycle de lubrification du moule (17).

10. Le procédé selon les revendications 8 et 9, **caractérisé en ce qu'**il comprend aussi une séquence d'opérations réalisées par le bras manipulateur, lequel est actionné à l'aide d'un programme apte à lui faire exécuter les opérations suivantes :
- extraire une pièce coulée (12) du moule (17),
- acheminer la pièce coulée (12) devant la caméra vidéo optique (14) et la caméra vidéo à infrarouge (15),
- maintenir la pièce coulée (12) en position pendant une durée nécessaire à l'acquisition de paramètres avec lesdites caméras vidéo (14, 15),
- optionnellement, repositionner la pièce coulée (12) pour des acquisitions de paramètres additionnels par lesdites caméras vidéo (14, 15) selon un point de vue différent,
- acheminer la pièce coulée (12) soit vers une première zone de déchargement (22), pour des moulages intègres et conformes, soit vers une seconde zone de déchargement (23), pour des moulages qui ne sont pas intègres ou sont géométriquement ou dimensionnellement non conformes aux données de conception.
